# EUROPEAN PATENT APPLICATION

(11) **EP 4 775 954 A1**
(43) Date of publication of application: **15.07.2026**
(21) Application number: 26150012.8
(22) Date of filing: 02.01.2026
(51) Int. Cl.: G01N 21/03, G01N 21/39, G01J 3/42, G01N 21/05

(54) **SELF-ALIGNED RESONANT CAVITY GAS CELL**

(30) Priority: 13.01.2025 IN 202511003018; 11.12.2025 US 202519416801
(71) Applicant: Honeywell International Inc., Charlotte, NC 28202 (US)
(72) Inventor: FENG, Chen, Charlotte, 28202 (US); TRIPATHY, Janmejaya, Charlotte, 28202 (US); HOYT, Chad, Charlotte, 28202 (US); SHAFAI, Moin S., Charlotte, 28202 (US); BROWN, Andy Walker, Charlotte, 28202 (US)
(74) Representative: Haseltine Lake Kempner LLP

(57) **Abstract**

The present disclosure provides a spectroscopic gas cell comprising a cylindrical body defining a chamber for receiving gas to be analyzed, an inlet and outlet for gas addition and removal, a first mirror adjacent to a first end of the cylindrical body, a second mirror adjacent to a second end, and piezoelectric actuators positioned to provide axial and off-axial position adjustment of the mirrors. The piezoelectric actuators enable real-time alignment correction during gas sensing operations and may be positioned to adjust both mirrors. The actuators are positioned within flexible circular holders and comprise piezoelectric stacks that adjust mirror orientation and axial position to maintain resonant cavity alignment for enhanced gas detection sensitivity.

## Description

### CROSS-REFERENCE TO RELATED APPLICATIONS

This application claims priority to India Patent Application No. 202511003018, titled REALTIME SELF-ALIGNED RESONANT CAVITY ENHANCED COMB SPECTROSCOPY GAS SENSING, filed January 13, 2025, which is hereby incorporated by reference in its entirety.

### FIELD OF INVENTION

The present disclosure relates to optical gas sensing systems, and more particularly to a resonant cavity enhanced spectroscopy gas cell.

### BACKGROUND

Optical gas sensing systems utilize the interaction between light and gas molecules to detect and quantify the presence of specific gases in a sample. These systems typically employ spectroscopic techniques that measure the absorption, emission, or scattering of light as it passes through a gas sample. The wavelength-dependent absorption characteristics of different gas molecules provide a means for identifying and measuring gas concentrations.

Resonant cavity enhanced spectroscopy represents an advancement in optical gas sensing technology that increases the effective optical path length through which light interacts with gas molecules. In these systems, mirrors are positioned at opposite ends of a gas-filled cavity to create multiple reflections of the laser beam, thereby extending the interaction time between the light and gas molecules. This extended interaction can provide sensitivity enhancements of several orders of magnitude compared to single-pass optical systems.

The performance of resonant cavity enhanced spectroscopy systems depends on maintaining precise alignment between the optical components, particularly the mirrors that form the resonant cavity. The mirrors must be positioned with sub-wavelength accuracy to achieve and maintain resonance conditions. Temperature variations, mechanical vibrations, and aging of components can cause misalignment that degrades system performance.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Various embodiments described herein relate to spectroscopic gas cells and methods system of aligning spectroscopic gas cells.

According to an aspect of the present disclosure, a spectroscopic gas cell is provided. The spectroscopic gas cell comprises a cylindrical body defining a chamber for receiving a gas to be analyzed. The spectroscopic gas cell comprises an inlet via which the gas to be analyzed is added to the chamber. The spectroscopic gas cell comprises an outlet via which the gas to be analyzed is removed from the chamber. The spectroscopic gas cell comprises a first mirror adjacent to a first end of the cylindrical body. The spectroscopic gas cell comprises a second mirror adjacent to a second end of the cylindrical body. The spectroscopic gas cell comprises a first plurality of piezoelectric actuators adjacent to and positioned to provide axial and off-axial position adjustment of the first mirror.

According to other aspects of the present disclosure, the spectroscopic gas cell may include one or more of the following features. The first plurality of piezoelectric actuators may comprise three piezoelectric actuators. The first plurality of piezoelectric actuators may be evenly spaced about a perimeter of the first mirror. Each of the first plurality of piezoelectric actuators may comprise a piezoelectric stack. Each of the first plurality of piezoelectric actuators may comprise a cubic piezoelectric stack. The first plurality of piezoelectric actuators may be positioned between the first mirror and the first end of the cylindrical body. The first plurality of piezoelectric actuators may be positioned within a flexible circular holder. The flexible circular holder may be shaped and positioned to create a gas seal. The spectroscopic gas cell may further comprise a second plurality of piezoelectric actuators adjacent to and positioned to provide axial and off-axial position adjustment of the second mirror. The second plurality of piezoelectric actuators may be positioned between the second mirror and the second end of the cylindrical body.

According to another aspect of the present disclosure, a method of aligning a spectroscopic gas cell is provided. The method comprises providing a spectroscopic gas cell comprising a cylindrical body defining a chamber for receiving a gas to be analyzed, an inlet via which the gas to be analyzed is added to the chamber, an outlet via which the gas to be analyzed is removed from the chamber, a first mirror adjacent to a first end of the cylindrical body, a second mirror adjacent to a second end of the cylindrical body, and a first plurality of piezoelectric actuators adjacent to and positioned to provide axial and off-axial position adjustment of the first mirror. The method comprises emitting laser light from a first dual frequency comb source through the first mirror such that the laser light from the first dual frequency comb source enters the gas cell, bounces back and forth between the first mirror and the second mirror, and exits the gas cell through the second mirror. The method comprises emitting laser light from a second dual frequency comb source such that the laser light from the second dual frequency comb source does not enter the gas cell but combines with the laser light from the first dual frequency comb source that exits the gas cell through the second mirror. The method comprises receiving, by a light receiver, the combined laser light. The method comprises determining an amplitude of the combined laser light. The method comprises using a control loop, repeatedly actuating one or more of the first plurality of piezoelectric actuators to adjust a position of the first mirror and determining a resulting change in the amplitude of the combined laser light to determine a position of the first mirror corresponding to a maximum amplitude of the combined laser light.

According to other aspects of the present disclosure, the method may include one or more of the following features. The first plurality of piezoelectric actuators may comprise three piezoelectric actuators. The first plurality of piezoelectric actuators may be evenly spaced about a perimeter of the first mirror. Each of the first plurality of piezoelectric actuators may comprise a piezoelectric stack. Each of the first plurality of piezoelectric actuators may comprise a cubic piezoelectric stack. The first plurality of piezoelectric actuators may be positioned between the first mirror and the first end of the cylindrical body. The first plurality of piezoelectric actuators may be positioned within a flexible circular holder. The flexible circular holder may be shaped and positioned to create a gas seal. The spectroscopic gas cell may further comprise a second plurality of piezoelectric actuators adjacent to and positioned to provide axial and off-axial position adjustment of the second mirror, and the method may further comprise, using the control loop, repeatedly actuating one or more of the second plurality of piezoelectric actuators to adjust a position of the second mirror and determining a resulting change in the amplitude of the combined laser light to determine a position of the second mirror corresponding to a maximum amplitude of the combined laser light. The second plurality of piezoelectric actuators may be positioned between the second mirror and the second end of the cylindrical body.

The foregoing general description of the illustrative embodiments and the following detailed description thereof are merely exemplary aspects of the teachings of this disclosure and are not restrictive.

### BRIEF DESCRIPTION OF FIGURES

The description of the illustrative embodiments is read in conjunction with the accompanying figures. It will be appreciated that, for simplicity and clarity of illustration, elements illustrated in the figures have not necessarily been drawn to scale, unless described otherwise. For example, the dimensions of some of the elements is exaggerated relative to other elements, unless described otherwise. Embodiments incorporating teachings of the present disclosure are shown and described with respect to the following figures presented herein.
FIG. 1 illustrates a perspective view of a spectroscopy gas cell, according to aspects of the present disclosure.
FIG. 2 illustrates a cross-sectional view of the spectroscopy gas cell of FIG. 1, according to aspects of the present disclosure.
FIG. 3 illustrates a cutaway view of a portion of the spectroscopy gas cell of FIG. 1, according to aspects of the present disclosure.
FIG. 4 illustrates an exploded perspective view of the spectroscopy gas cell of FIG. 1, according to aspects of the present disclosure.
FIG. 5A illustrates a perspective view of a piezoelectric array holder, with two piezoelectric stacks installed and one piezoelectric stack removed for visibility, according to aspects of the present disclosure.
FIG. 5B illustrates a reverse perspective view of the piezoelectric array holder of FIG. 5A, with two piezoelectric stacks installed and one piezoelectric stack removed for visibility, according to aspects of the present disclosure.
FIG. 6 illustrates a system diagram of a resonant cavity enhanced comb spectroscopy gas sensing system, according to aspects of the present disclosure.
FIG. 7 illustrates a block diagram of a control device for a spectroscopy gas sensing system, according to aspects of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures are embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase is included in at least one embodiment of the present disclosure and is included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase is included in at least one example of the present disclosure and is included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature is optionally included in some examples, or it is excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information is transmitted to and/or received from these elements or components.

The term "component" may refer to an article, a device, or an apparatus that may comprise one or more surfaces, portions, layers and/or elements. For example, an example component may comprise one or more substrates that provide underlying layer(s) for the component and may comprise one or more elements that may form part of and/or are disposed on top of the substrate. In the present disclosure, the term "element" may refer to an article, a device, or an apparatus that may provide one or more functionalities.

Resonant cavity enhanced spectroscopy represents a powerful technique for gas sensing applications, where laser light undergoes multiple reflections between highly reflective mirrors to achieve substantial path length enhancement. In such systems, the effective optical path length may be increased by factors exceeding 100,000 through the use of high finesse mirrors that enable over 100,000 reflections within a compact cavity structure. This enhancement directly translates to improved sensitivity for detecting trace gases with low absorption coefficients.

The performance of resonant cavity enhanced spectroscopy systems depends on maintaining precise alignment between opposing mirrors. Even minute misalignments can substantially reduce the resonant efficiency and compromise the sensitivity enhancement that makes these systems valuable for trace gas detection. Thermal variations, mechanical stress, and aging of components may introduce small but significant changes in mirror positioning that degrade system performance over time.

Traditional approaches to resonant cavity enhanced spectroscopy typically employ piezoelectric rings or similar actuators to adjust cavity length for matching the resonant cavity free spectral range to the repetition frequency of comb sources. However, these conventional systems generally lack the capability to actively correct for off-axis misalignments that may occur during operation due to environmental factors or component aging.

Various embodiments of the present disclosure provide spectroscopic gas cell that addresses these limitations through the implementation of real-time self-alignment capabilities. Such a spectroscopic gas cell incorporates piezoelectric actuator arrays positioned to provide both axial and off-axial adjustment of cavity mirrors. The piezoelectric actuator arrays enable continuous correction of mirror positioning during gas sensing operations, maintaining optimal resonant conditions without requiring manual realignment procedures.

In various embodiments, the spectroscopic gas cell utilizes feedback from the optical output to detect alignment degradation and automatically compensate for misalignments through closed-loop control of the piezoelectric actuators. This approach may eliminate the need for precision alignment procedures during assembly and may maintain peak performance throughout the operational lifetime of the device. The self-alignment capability may be particularly valuable in field-deployed instruments where manual realignment would be impractical or impossible.

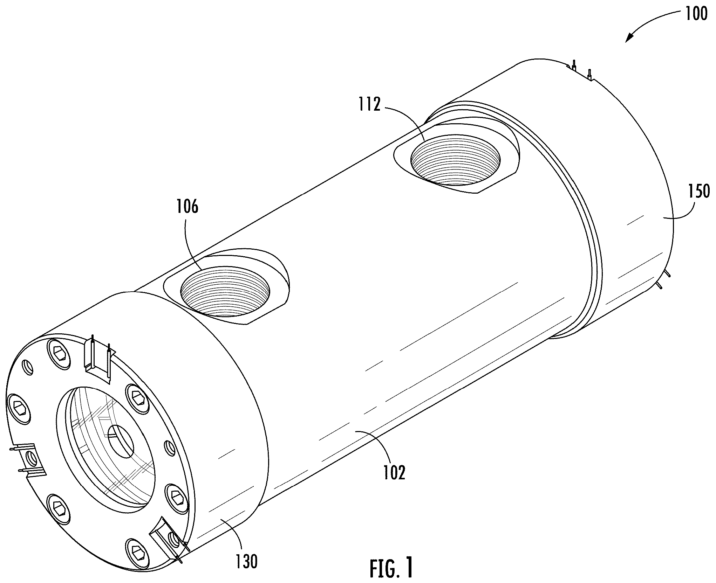

Referring to FIG. 1, a spectroscopy gas cell 100 provides a compact and efficient structure for performing resonant cavity enhanced spectroscopy measurements. The spectroscopy gas cell 100 includes a cylindrical body 102 that forms the main structural housing of the device. The cylindrical body 102 defines a chamber for receiving a gas to be analyzed, where the chamber extends longitudinally through the interior of the cylindrical body 102 to provide an enclosed space for gas analysis operations.

The spectroscopy gas cell 100 includes a gas inlet 106 positioned on the cylindrical body 102 that functions as an inlet via which the gas to be analyzed is added to the chamber. The gas inlet 106 may be configured to receive gas samples from external sources and direct the gas samples into the chamber defined by the cylindrical body 102. In some cases, the gas inlet 106 may be positioned to facilitate efficient gas flow into the chamber while maintaining the optical properties of the resonant cavity.

The spectroscopy gas cell 100 further includes a gas outlet 112 located on the cylindrical body 102 that functions as an outlet via which the gas to be analyzed is removed from the chamber. The gas outlet 112 enables continuous gas flow through the chamber, allowing for real-time analysis of gas samples while maintaining a controlled environment within the cylindrical body 102. The positioning of the gas outlet 112 may complement the gas inlet 106 to establish a defined gas flow path through the chamber.

As shown in FIG. 1, the spectroscopy gas cell 100 includes a first end cap 130 and a second end cap 150 positioned at opposite ends of the cylindrical body 102. The first end cap 130 is located at one end of the cylindrical body 102, while the second end cap 150 is positioned at the opposite end. The first end cap 130 and the second end cap 150 may enclose the ends of the cylindrical body 102, forming a sealed cavity structure that contains the gas to be analyzed while providing mounting surfaces for optical components. The end caps may provide structural integrity to the spectroscopy gas cell 100 and may facilitate the assembly of internal components within the chamber.

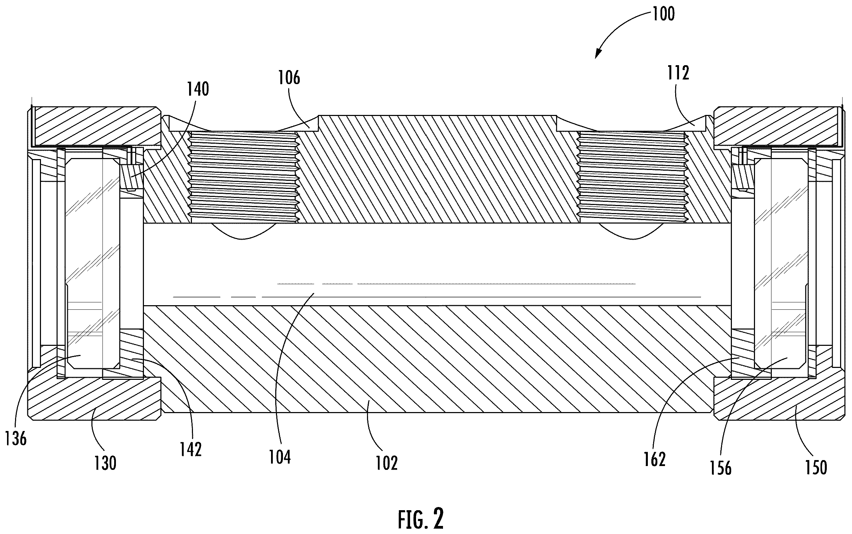

Referring to FIG. 2, the spectroscopy gas cell 100 includes a resonant cavity 104 that extends longitudinally through the interior of the cylindrical body 102. The resonant cavity 104 defines an enclosed optical path where laser light undergoes multiple reflections to achieve enhanced interaction with gas samples. The cylindrical body 102 may be constructed from any suitable material that provides high stability and low thermal expansion characteristics that help maintain consistent cavity dimensions across varying temperature conditions.

The spectroscopy gas cell 100 includes a first mirror 136 positioned adjacent to a first end of the cylindrical body 102. The first mirror 136 may be a concave optical element configured to reflect laser light within the resonant cavity 104. In some cases, the first mirror 136 may be a high reflectivity mirror with wedged anti-reflective (AR) back having finesse greater than 300,000 for high performance resonant cavity operation. The first mirror 136 provides one reflective surface of the resonant optical path within the resonant cavity 104.

As shown in FIG. 2, the spectroscopy gas cell 100 further includes a second mirror 156 positioned adjacent to a second end of the cylindrical body 102. The second mirror 156 may face the first mirror 136 across the resonant cavity 104 to establish an opposing mirror configuration. The second mirror 156 may have similar optical characteristics to the first mirror 136, providing the complementary reflective surface for the resonant optical path. The cavity length between the first mirror 136 and the second mirror 156 may be, for example, 75 mm, which may enable an enhancement factor of 100,000 and an equivalent path length of 7500 M through multiple reflections.

The spectroscopy gas cell 100 may include a first piezoelectric array 140 positioned adjacent to and configured to provide axial and off-axial position adjustment of the first mirror 136. The first piezoelectric array 140 may comprise three piezoelectric actuators that are evenly spaced about a perimeter of the first mirror 136. The first piezoelectric array 140 may be positioned between the first mirror 136 and the first end of the cylindrical body 102, enabling precise control of the first mirror 136 position and orientation during operation.

As further shown in FIG. 2, a first piezoelectric array holder 142 may also be positioned between the first mirror 136 and the cylindrical body 102. The first piezoelectric array holder 142 may function as a flexible circular holder within which the first piezoelectric array 140 is positioned. The first piezoelectric array holder 142 may be constructed from injection molded thermal plastic rubber, which may comprise synthetic rubber material. The first piezoelectric array holder 142 may serve dual functions as a support structure for piezoelectric components and as a gas seal between the first mirror 136 and the cylindrical body 102.

The spectroscopy gas cell 100 may include a second piezoelectric array holder 162 positioned at the second end of the cylindrical body 102. The second piezoelectric array holder 162 may provide structural support and sealing functions similar to the first piezoelectric array holder 142. The second piezoelectric array holder 162 may be constructed from the same injection molded thermal plastic rubber material as the first piezoelectric array holder 142.

With continued reference to FIG. 2, the spectroscopy gas cell 100 maintains contacts between the first mirror 136, the first piezoelectric array 140, and the cylindrical body 102. This contact arrangement ensures secure positioning and proper force transmission between components while maintaining the optical properties of the resonant cavity 104. The contact configuration enables precise adjustment of mirror positioning through the piezoelectric arrays while preserving the structural integrity of the assembly.

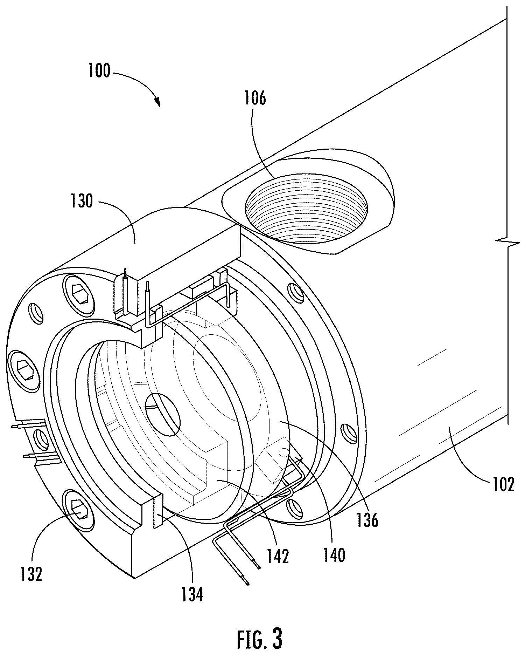

Referring to FIG. 3, the assembly relationship between components at one end of the spectroscopy gas cell 100 may be illustrated in a cutaway view. The first piezoelectric array holder 142 is positioned adjacent to the cylindrical body 102 and serves as a mounting structure for the first piezoelectric array 140. The first piezoelectric array 140 is positioned between the cylindrical body 102 and the first mirror 136, enabling the piezoelectric actuators to directly influence the position and orientation of the first mirror 136.

As shown in FIG. 3, a first compression ring 134 may be positioned behind the first mirror 136 to provide back pressure that secures the mirror assembly. The first compression ring 134 may be constructed from injection molded thermal plastic rubber material, which may enable the compression ring to press the first mirror 136 against the first piezoelectric array 140. The first compression ring 134 may maintain consistent contact pressure between components while accommodating small movements during piezoelectric adjustment operations.

The first end cap 130 may enclose the assembly and may be secured to the cylindrical body 102 using first end cap screws 132. The first end cap 130 may be constructed from aluminum material to provide structural strength for securing the first piezoelectric array holder 142 and the first compression ring 134. The first end cap screws 132 may pass through the first end cap 130 to fasten the entire assembly together, creating a secure and sealed configuration.

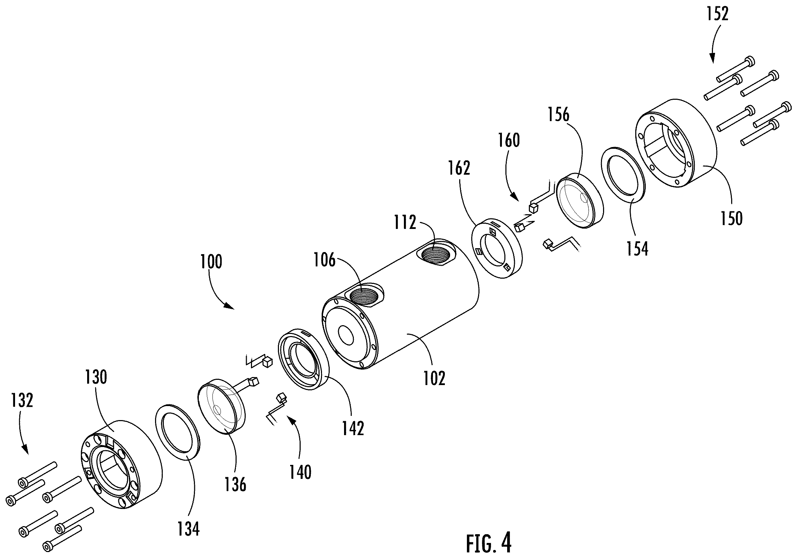

Referring to FIG. 4, the spectroscopy gas cell 100 may include a second piezoelectric array 160 positioned adjacent to and configured to provide axial and off-axial position adjustment of the second mirror 156. The second piezoelectric array 160 may comprise three piezoelectric actuators that are evenly spaced about a perimeter of the second mirror 156, similar to the configuration of the first piezoelectric array 140. The second piezoelectric array 160 may be positioned between the second mirror 156 and the second end of the cylindrical body 102.

As further shown in FIG. 4, a second compression ring 154 may be positioned to apply pressure to the second mirror 156. The second compression ring 154 may be constructed from injection molded thermal plastic rubber material and may function to press the second mirror 156 against the second piezoelectric array 160. The second compression ring 154 may maintain contact between the second mirror 156, the second piezoelectric array 160, and the cylindrical body 102.

The second end cap 150 may secure the assembly at the second end of the cylindrical body 102 using second end cap screws 152. The second end cap 150 may be constructed from aluminum material and may provide structural support for the second piezoelectric array holder 162 and the second compression ring 154. The second end cap screws 152 may fasten the second end cap 150 to the cylindrical body 102, completing the enclosed assembly of the spectroscopy gas cell 100.

The assembly configuration shown in FIG. 4 may demonstrate how the piezoelectric arrays 140, 160 enable adjustment of the mirrors 136, 156 for alignment purposes during operation. The compression rings 134, 154 may provide back pressure to maintain contact between the mirrors 136, 156, the piezoelectric arrays 140, 160, and the cylindrical body 102. The piezoelectric array holders 142, 162 may provide structural support and may serve as gas seals between the mirrors 136, 156 and the cylindrical body 102, ensuring that the gas to be analyzed remains contained within the resonant cavity 104 while enabling precise mirror positioning adjustments.

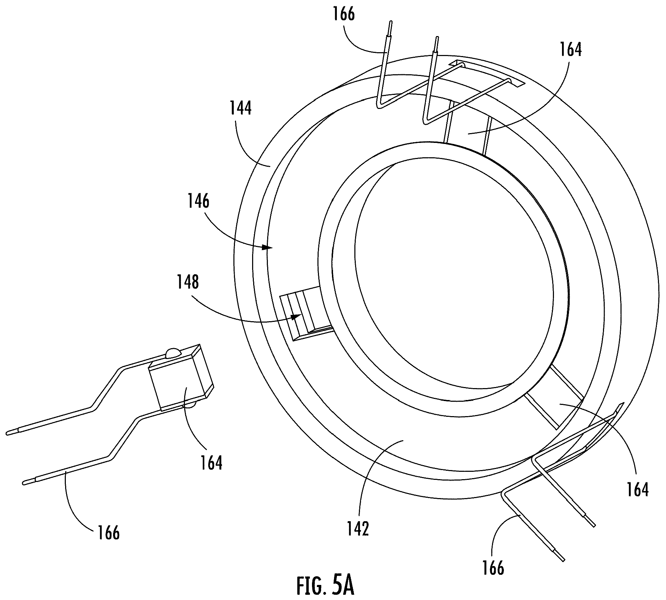

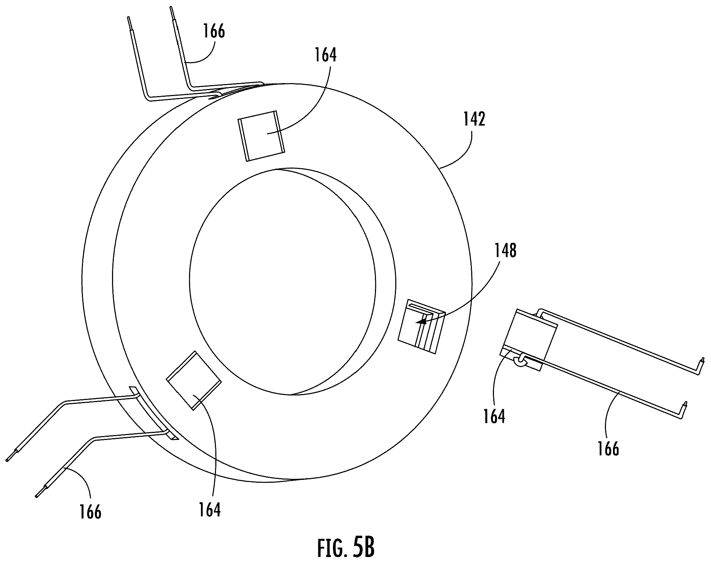

Referring now to FIGS. 5A and 5B, the first piezoelectric array holder 142 is illustrated in more detail. As shown in FIG. 5A, the first piezoelectric array holder 142 includes a raised edge 144 that forms a circular perimeter around the outer portion of the first piezoelectric array holder 142 and helps define a depression 146 that creates a recessed area in the central region of the first piezoelectric array holder 142. The depression 146 receives and provides proper positioning of the first mirror 136. The first piezoelectric array holder 142 includes three through-holes 148 positioned at equal intervals around the depression to provide uniform spacing between the piezoelectric actuators. Each through-hole 148 may be configured to accommodate a piezoelectric stack 164, enabling the piezoelectric stack 164 to be securely positioned within the first piezoelectric array holder 142. The through-holes 148 may extend through the first piezoelectric array holder 142 to allow the piezoelectric stacks 164 to make contact with both the first mirror 136 and the cylindrical body 102.

The first piezoelectric array 140 may include three piezoelectric stacks 164, each positioned within a respective one of the through-holes 148. Each of the first plurality of piezoelectric actuators may comprise a piezoelectric stack 164. In some cases, each of the first plurality of piezoelectric actuators may comprise a cubic piezoelectric stack 164. The piezoelectric stacks 164 may be off-the-shelf piezoelectric stack actuators with 3.5 um stroke at 150 V, providing precise positioning capabilities for mirror adjustment operations.

Piezoelectric stack wires 166 extend from each piezoelectric stack 164. The piezoelectric stack wires 166 provide electrical connections for controlling the piezoelectric stacks 164. The piezoelectric stack wires 166 enable individual control of each piezoelectric stack 164, allowing for differential voltage application to achieve both axial and off-axial positioning adjustments of the first mirror 136.

The piezoelectric stack wires 166 are connected to each piezoelectric stack 164 to provide electrical control signals. The piezoelectric stack wires 166 may facilitate communication between external control circuitry and the piezoelectric stacks 164, enabling real-time adjustment of mirror positioning based on feedback from the optical system. The electrical connections provided by the piezoelectric stack wires 166 may allow for independent control of each piezoelectric stack 164, enabling precise adjustment of both the axial position and the tilt angle of the first mirror 136.

The configuration of the piezoelectric stacks 164 within the first piezoelectric array holder 142 enable the first piezoelectric array 140 to provide both axial displacement adjustment and off-axial adjustment of the first mirror 136. The average of the drive voltages applied to the three piezoelectric stacks 164 may move the first mirror 136 in an axial direction, while differences in the drive voltages applied to the piezoelectric stacks 164 may tilt the first mirror 136 and shift the center of surface radius of curvature of the first mirror 136. This dual adjustment capability may enable the spectroscopy gas cell 100 to maintain optimal alignment conditions during gas sensing operations.

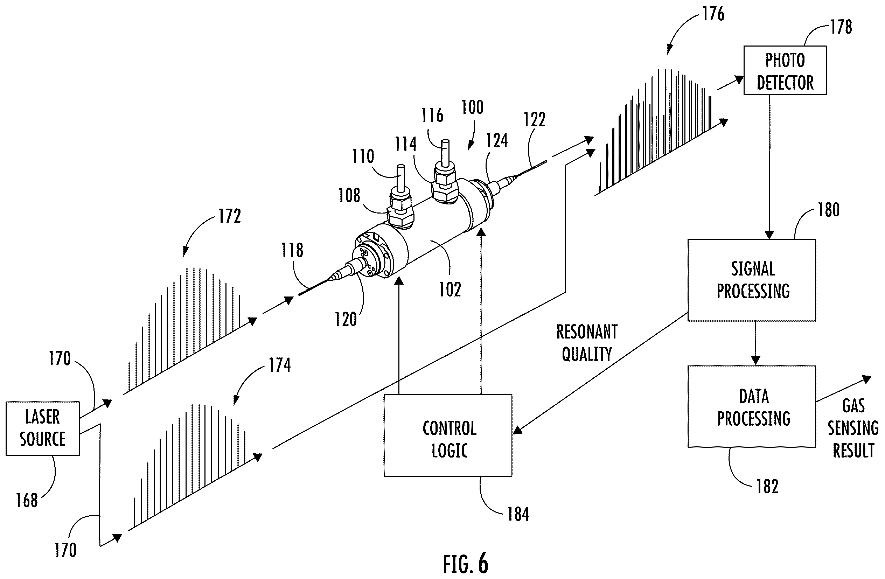

Referring to FIG. 6, a resonant cavity enhanced comb spectroscopy gas sensing system may integrate the spectroscopy gas cell 100 with external components to perform gas analysis operations. The spectroscopy gas cell 100 may be connected to a gas inlet fitting 108 that couples to a gas inlet pipe 110. The gas inlet fitting 108 and the gas inlet pipe 110 may provide a pathway for introducing gas samples into the spectroscopy gas cell 100 through the gas inlet 106. Similarly, a gas outlet fitting 114 may connect to a gas outlet pipe 116 to facilitate removal of gas samples from the spectroscopy gas cell 100 through the gas outlet 112.

The system may include optical connections for transmitting laser light into and out of the spectroscopy gas cell 100. A first optical fiber cable 118 terminated with a first optical fiber ferrule 120 may couple optical signals into the spectroscopy gas cell 100. The first optical fiber ferrule 120 may provide a precise optical interface for directing laser light through the first mirror 136 into the resonant cavity 104 with exact laser beam mode matching. A second optical fiber cable 122 terminated with a second optical fiber ferrule 124 may couple optical signals out of the spectroscopy gas cell 100. The second optical fiber ferrule 124 may collect laser light that exits the spectroscopy gas cell 100 through the second mirror 156.

As shown in FIG. 6, a laser source 168 may generate laser light 170 for the gas sensing operation. The laser light 170 may be combined with optical signals from a first dual frequency comb source 172 and a second dual frequency comb source 174. The configuration of FIG. 6 enables dual comb spectroscopy measurements where the two comb sources provide reference and measurement signals for enhanced detection sensitivity. In dual frequency comb spectroscopy, laser light is emitted from the first dual frequency comb source through the first mirror 136 such that the laser light from the first dual frequency comb source 172 enters the gas cell 100, bounces back and forth between the first mirror 136 and the second mirror 156, and exits the gas cell through the second mirror 156. The laser light may undergo multiple reflections within the resonant cavity 104, creating an enhanced optical path length for interaction with gas molecules present in the chamber. Laser light is also emitted from the second dual frequency comb source 174 such that the laser light from the second dual frequency comb source 174 does not enter the gas cell 100 but combines with the laser light from the first dual frequency comb source that exits the gas cell through the second mirror 156.

This combined light 176 is received by a photodetector 178. The photodetector 178 converts the optical signal to an electrical signal for further processing. A signal processing module 180 receives the electrical signal from the photodetector 178 and processes the detected signal to extract resonant quality information and other relevant data. A data processing module 182 receives the processed signal from the signal processing module 180 and may perform further analysis to determine gas sensing results which may be output.

In various embodiments, the signal from the photodetector 178 may also be used to align the mirrors. Using the signal from the photodetector 178, the signal processing module 180 determines an amplitude of the combined laser light to assess the alignment quality of the resonant cavity 104. A control logic module 184 receives feedback from the signal processing module 180 regarding resonant quality and generates control signals to maintain optimal alignment and resonance conditions within the spectroscopy gas cell 100. The control logic module 184 may implement a control loop that repeatedly actuates one or more of the piezoelectric actuators of the first piezoelectric array 140 to adjust a position of the first mirror 136 and determines a resulting change in the amplitude of the combined laser light to determine a position of the first mirror 136 corresponding to a maximum amplitude of the combined laser light. The method may additionally or alternatively include using the control loop to repeatedly actuate one or more of the piezoelectric actuators of the second piezoelectric array 160 to adjust a position of the second mirror 156 and determine a resulting change in the amplitude of the combined laser light to determine a position of the second mirror 156 corresponding to a maximum amplitude of the combined laser light.

A piezoelectric stack displacement difference of 3.5 um over mirror front on radius of 10 mm may correct 0.7 arcmin mirror tilt. For concave spherical mirrors with 1000 mm radius of curvature, this adjustment capability may provide 0.2 mm centering correction, which may be sufficient to cover component assembly tolerances and operational condition variations. The maximum mirror-to-mirror separation correction of 7 um may be adequate to compensate for cavity cylinder and piezoelectric stack manufacturing tolerances as well as variations under operational thermal and structural conditions.

The system may perform closed-loop correction based on feedback from cavity output during gas sensing operation. The control logic module 184 may continuously monitor the amplitude and quality of the combined optical signal 176 and may adjust the piezoelectric arrays 140, 160 in real-time to maintain optimal resonant conditions. The system may compensate for ambient temperature and structural variations introduced resonant cavity changes through this continuous feedback and adjustment process.

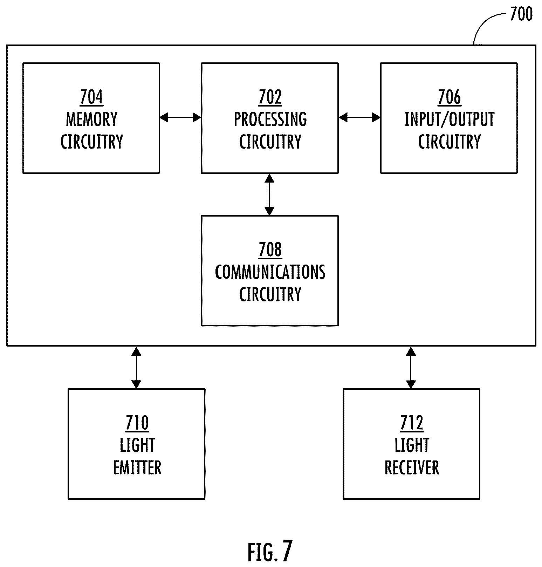

Referring to FIG. 7, a control device 700 may coordinate the operation of the resonant cavity enhanced comb spectroscopy gas sensing system. The control device 700 may include processing circuitry 702 that executes control algorithms for the self-alignment and gas sensing operations. The processing circuitry 702 may be connected to memory circuitry 704, which may store data and instructions for operation of the control device 700. The memory circuitry 704 may contain calibration parameters, control algorithms, and measurement data for the gas sensing system.

The control device 700 may include input/output circuitry 706 that facilitates data exchange with external components of the gas sensing system. The input/output circuitry 706 may be connected to the processing circuitry 702 and may manage communication with the piezoelectric arrays 140, 160 and other system components. Communications circuitry 708 may be connected to the processing circuitry 702 and may manage communication protocols for the control device 700.

As shown in FIG. 7, the control device 700 may be operatively connected to a laser light emitter 710 and a laser light receiver 712. The laser light emitter 710 may generate laser light for transmission into the spectroscopy gas cell 100, while the laser light receiver 712 may detect optical signals output from the spectroscopy gas cell 100. The communications circuitry 708 may provide bidirectional communication between the control device 700 and both the laser light emitter 710 and the laser light receiver 712.

The control device 700 may function as a control device in the overall system architecture, coordinating the operation of the spectroscopy gas sensing system by controlling the laser light emitter 710, receiving signals from the laser light receiver 712, and processing the received data through the processing circuitry 702 to perform gas sensing analysis. The control device 700 may implement the control loop algorithms that maintain optimal mirror alignment through continuous adjustment of the piezoelectric arrays 140, 160 based on feedback from the optical system output.

The self-aligned resonant cavity design may provide substantial benefits over conventional resonant cavity systems through the elimination of precision alignment requirements during manufacturing and operation. Traditional resonant cavity enhanced spectroscopy systems may require extensive manual alignment procedures during assembly, where mirrors must be positioned with angstrom-level accuracy to achieve proper resonance conditions. These alignment procedures may be time-consuming, require specialized equipment, and may result in low manufacturing yields due to the difficulty of achieving the required precision.

The self-aligned resonant cavity design may enable a drop-in assembly process without precision alignment adjustment during manufacturing. The piezoelectric actuator arrays may compensate for manufacturing tolerances and component variations that would otherwise require manual adjustment during assembly. This approach may significantly reduce manufacturing time and complexity while improving production yields. The assembly process may involve simply positioning components in their designated locations without the need for fine-tuned alignment procedures, as the piezoelectric actuators may automatically adjust mirror positions to achieve optimal resonance conditions.

The self-alignment capability may eliminate the need for precision alignment adjustment after aging of the cavity. Conventional resonant cavity systems may experience performance degradation over time due to thermal cycling, mechanical stress, and material aging effects that cause gradual changes in mirror positioning. These changes may require periodic realignment procedures to maintain system performance. The self-aligned design may continuously compensate for these aging effects through real-time adjustment of mirror positions, maintaining optimal performance throughout the operational lifetime of the device without manual intervention.

Real-time self-alignment may be performed during gas sensing operation through continuous monitoring of the optical output and automatic adjustment of piezoelectric actuators. The system may detect alignment degradation through analysis of the resonant cavity output signal and may immediately correct for misalignments without interrupting gas sensing operations. This continuous alignment correction may ensure that the system maintains peak performance under varying environmental conditions and operational stresses.

The self-aligned design may achieve high sensitivity gas sensing that enables detection of multiple targeted gases with low concentration and weak absorption features. The continuous alignment correction may maintain the maximum possible enhancement factor throughout operation, ensuring that the system achieves the full sensitivity potential of the resonant cavity design. This capability may be particularly valuable for detecting trace gases that exhibit weak absorption characteristics and would be difficult to measure with conventional spectroscopy techniques.

The maintenance of highest resonant efficiency in actual operation may be achieved through continuous alignment correction that compensates for environmental variations and operational disturbances. Temperature fluctuations, vibrations, and other environmental factors may cause small changes in mirror positioning that would degrade performance in conventional systems. The self-aligned design may automatically correct for these disturbances, maintaining optimal resonant conditions and ensuring consistent measurement accuracy across varying operational conditions.

The self-alignment capability may provide operational advantages in field-deployed instruments where manual realignment would be impractical or impossible. Remote sensing applications may benefit from the autonomous alignment correction capability, as the system may maintain optimal performance without requiring technician intervention or specialized alignment equipment. This autonomous operation may reduce maintenance requirements and improve system reliability in challenging deployment environments.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A spectroscopic gas cell comprising:
a cylindrical body defining a chamber for receiving a gas to be analyzed;
an inlet via which the gas to be analyzed is added to the chamber;
an outlet via which the gas to be analyzed is removed from the chamber;
a first mirror adjacent to a first end of the cylindrical body;
a second mirror adjacent to a second end of the cylindrical body; and
a first plurality of piezoelectric actuators adjacent to and positioned to provide axial and off-axial position adjustment of the first mirror.

2. The gas cell of claim 1, wherein the first plurality of piezoelectric actuators comprises three piezoelectric actuators.

3. The gas cell of claim 1, wherein the first plurality of piezoelectric actuators are evenly spaced about a perimeter of the first mirror.

4. The gas cell of claim 1, wherein each of the first plurality of piezoelectric actuators comprises a piezoelectric stack.

5. The gas cell of claim 1, wherein each of the first plurality of piezoelectric actuators comprises a cubic piezoelectric stack.

6. The gas cell of claim 1, wherein the first plurality of piezoelectric actuators are positioned between the first mirror and the first end of the cylindrical body.

7. The gas cell of claim 1, wherein the first plurality of piezoelectric actuators are positioned within a flexible circular holder.

8. The gas cell of claim 7, wherein the flexible circular holder is shaped and positioned to create a gas seal.

9. The gas cell of claim 1, further comprising a second plurality of piezoelectric actuators adjacent to and positioned to provide axial and off-axial position adjustment of the second mirror.

10. The gas cell of claim 9, wherein the second plurality of piezoelectric actuators are positioned between the second mirror and the second end of the cylindrical body.

11. A method of aligning a spectroscopic gas cell, the method comprising:
providing a spectroscopic gas cell comprising:
a cylindrical body defining a chamber for receiving a gas to be analyzed;
an inlet via which the gas to be analyzed is added to the chamber;
an outlet via which the gas to be analyzed is removed from the chamber;
a first mirror adjacent to a first end of the cylindrical body;
a second mirror adjacent to a second end of the cylindrical body; and
a first plurality of piezoelectric actuators adjacent to and positioned to provide axial and off-axial position adjustment of the first mirror;
emitting laser light from a first dual frequency comb (DFC) source through the first mirror such that the laser light from the first DFC source enters the gas cell, bounces back and forth between the first mirror and the second mirror, and exits the gas cell through the second mirror;
emitting laser light from a second DFC source such that the laser light from the second DFC source does not enter the gas cell but combines with the laser light from the first DFC source that exits the gas cell through the second mirror;
receiving, by a light receiver, the combined laser light;
determining an amplitude of the combined laser light; and
using a control loop, repeatedly actuating one or more of the first plurality of piezoelectric actuators to adjust a position of the first mirror and determining a resulting change in the amplitude of the combined laser light to determine a position of the first mirror corresponding to a maximum amplitude of the combined laser light.

12. The method of claim 11, wherein the first plurality of piezoelectric actuators comprises three piezoelectric actuators.

13. The method of claim 11, wherein the first plurality of piezoelectric actuators are evenly spaced about a perimeter of the first mirror.

14. The method of claim 11, wherein each of the first plurality of piezoelectric actuators comprises a piezoelectric stack.

15. The method of claim 11, wherein the first plurality of piezoelectric actuators are positioned between the first mirror and the first end of the cylindrical body.
